# EUROPEAN PATENT SPECIFICATION

(11) **EP 2 050 722 B1**
(45) Date of publication and mention of the grant of the patent: **23.04.2014**
(21) Application number: 07791616.1
(22) Date of filing: 31.07.2007
(51) Int. Cl.: C02F 1/461, C02F 5/00

(54) **WATER CLEANING METHOD AND WATER CLEANER**
WASSERREINIGUNGSVERFAHREN UND WASSERREINIGER
PROCÉDÉ D'ÉPURATION DE L'EAU ET ÉPURATEUR D'EAU

(30) Priority: 08.08.2006 JP 2006215225
(43) Date of publication of application: 22.04.2009
(73) Proprietor: Koganei Corporation, Koganei-shi Tokyo 184-8533 (JP)
(72) Inventor: NAKANO, Takayuki, Tokyo 101-0032 (JP)
(74) Representative: Bates, Philip Ian
(86) International application number: PCT/JP2007/064931
(87) International publication number: WO 2008/018317

(56) References cited:
- JP-A- 04 244 291
- JP-A- 2000 140 849
- JP-A- 2003 200 170
- JP-A- 2003 275 761
- JP-A- 2005 013 966
- JP-A- 2005 152 864
- JP-A- 2006 061 844
- JP-A- 2006 098 003
- NL-A- 8 303 208

## Description

### TECHNICAL FIELD

This invention relates to a method of purifying water and an apparatus therefor, particularly to a method of purifying water by electrochemically removing scale contained in cooling water used, for example, in office or factory facilities, or contained in the cooling water circulating between a condenser and a cooling tower of air conditioners used for cooling, and to an apparatus therefor.

### BACKGROUND ART

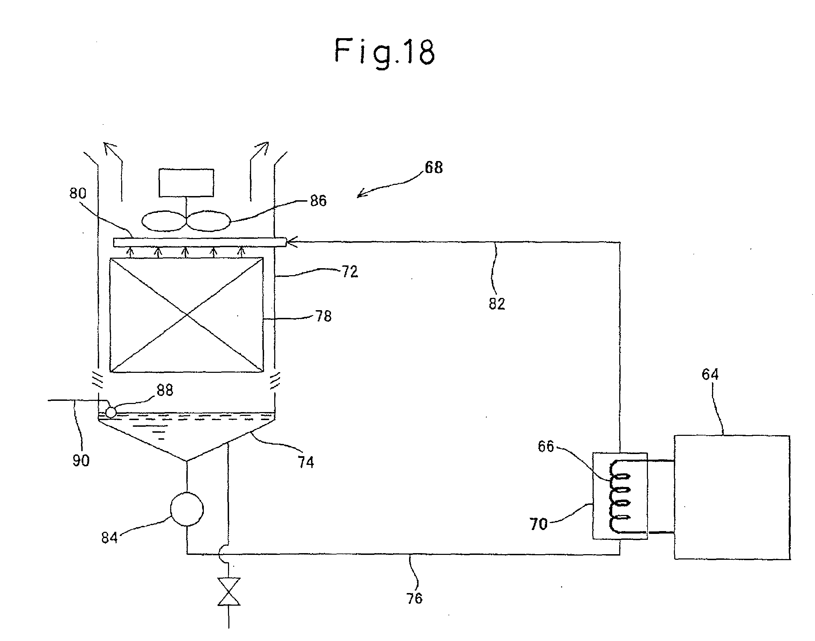

Fig. 18 is a diagram illustrating an air-conditioning system. As shown, an air conditioner 64 includes a compressor (not shown) for compressing a gaseous refrigerant, a condenser 66 for cooling and condensing, by using cooling water, the gaseous refrigerant that has generated heat upon being compressed, and an evaporator (not shown) for evaporating the refrigerant by permitting it to flow in through an expansion valve, the refrigerant being obtained by condensation through the condenser 66.

The condenser 66 is provided in a cooling tank 70 to cool the gaseous refrigerant that flows through the condenser 66, and cooling water is fed to the cooling tank 70 from a cooling tower 68. The cooling tower 68 feeds the cooling water to the cooling tank 70, and includes a cylindrical tower body 72 and a water-receiving vessel 74 provided under the tower body 72, the water-receiving vessel 74 and the cooling tank 70 being connected together through a feed line 76.

The tower body 72 incorporates therein a filler unit 78 having many passages though which the cooling water and the cooling air flow. The tower body 72 has a spray nozzle 80 for spraying the cooling water onto the filler unit 78, the spray nozzle 80 being connected to the cooling tank 70 through a return line 82, whereby the cooling water in the cooling tank 70 is fed to the spray nozzle 80 by a circulating pump 84 provided in the feed line 76.

The cooling water sprayed onto the filler unit 78 from the spray nozzle 80 flows through many passages formed in the filler unit 78, and falls into the water-receiving vessel 74. Thus, a cooling water path through which the water circulates is formed by the cooling tower 68, cooling tank 70, and feed line 76 and return line 82 connecting them together, and the water flows through the cooling water path by operating the circulating pump 84.

A blower 86 is provided at an upper position in the tower body 72, the air flows in being sucked up from the lower portion of the tower body 72 by the blower 86, and the air that has flowed in flows through the passages in the filler unit 78 against the flow of the cooling water. The cooling water comes into direct contact with the air that flows reversely, and evaporates while exchanging heat. The cooling water is further cooled by losing evaporation heat. To replenish the cooling water that has decreased by the evaporation of the cooling water, the tower body 72 is replenished with the cooling water through a replenishing line 90 that may be opened or closed by a float 88.

As described above, the cooling tower 68 cools the cooling water by utilizing the loss of heat of vaporization at the time when the cooling water evaporates. Therefore, the cooling water is evaporating away from the cooling tower 68 at all times. The city water and underground water used as the cooling water in the cooling tower 68 contains cations such as calcium ions, magnesium ions and dissolved silica (contained in scale). The cooling water that decreases by evaporation is constantly replenished with the city water or underground water.

Therefore, the concentration of cations contained in the cooling water gradually increases. Concretely, the electric conductivity of the city water initially supplied, which is 100 to 200 µS/cm increases to not lower than 1000 µS/cm in several days to a week. The cations coagulate to form scale, causing such problems as lowering the heat-exchanging efficiency by adhesion on the heat-exchanging surfaces of the condenser 66 and increasing the flow resistance of cooling water due to deposition on the inner surfaces of the pipings through which the cooling water is circulating.

Various germs such as algae and Legionella pneumophila propagate in large amounts in the cooling water which scatters from the cooling tower together with these various germs causing such problems as may impair the health of people working around the cooling tower and may impair health of local inhabitants.

Therefore, a countermeasure has been employed for preventing the occurrence of scale by lowering the concentration of cations by adding city water or ground water to the cooling water. However, this increases the cost of the cooling water in those districts where city water or underground water is expensive, and therefore, disadvantageously increases the cost for the maintenance and management of the air conditioners.

In establishments where the city water or underground water is not cheaply available, it has been attempted to add a chemical agent to the circulating water to control the electric conductivity of the cooling water in order to prevent the adhesion of scale on the heat-exchanging surfaces of the condenser or on the inner surfaces of the pipings. However, the chemical agent must be added to the cooling water at regular intervals requiring a considerable amount of cost even when the above method is employed.

Even when the chemical agent is added to the cooling water, it is not possible to completely avoid the scale from solidly adhering on the heat-exchanging surfaces of the condenser or on the inner surfaces of the pipings, and removal of the solidly adhered scale is still required, even though the interval for the removal work can be extended. Therefore, the laborious work and expenditure could not be avoided.

As for the problem of propagation of algae and various germs, a countermeasure has been taken by adding a germicide to the cooling water. However, propagation of algae and various germs cannot be avoided in the long run, and algae and various germs scatter into the open air from the cooling tower together with the germicide causing air pollution.

In order to solve these problems, therefore, many kinds of purifying apparatuses have been proposed by, for example, introducing, into an electrolytic purifying vessel, an electrode unit in which a plurality of plate-like electrodes are opposed in parallel maintaining a predetermined gap, introducing the cooling water into the electrolytic purifying vessel, applying positive and negative voltages to the electrodes, allowing the cations contained in the cooling water to be precipitated as scale on the surfaces of the negative electrodes, and removing the cations from the cooling water.
Patent document 1: JP-A-2001-259690
Patent document 2: JP-A-4-18982
Patent document 3: JP-A-61-181591
Patent document 4: JP-A-58-35400
Patent document 5 JP-A-2001-137891
Patent document 6: JP-A-9-103797
Patent document 7: JP-A-2001-137858
Patent document 8: JP-A-9-38668
Patent document 9: JP-A-11-114335

Patent document NL8303208 relates to a method and device for purifying wastewater.

### DISCLOSURE OF THE INVENTION

When these purifying apparatuses are operated for extended periods of time; however the scale precipitates and deposits on the surfaces of the negative electrodes becoming gradually thick, interrupting the electric current from flowing and decreasing the function for purifying the cooling water. When the scale has deposited more than a predetermined level, therefore, service personnel must take out the negative electrodes from the purifying apparatus, and physically remove the scale from the electrodes, posing a problem of cumbersome maintenance and management of the purifying apparatus and increased cost.

To cope with this problem, a purifying apparatus has been proposed according to which the polarities of the electrodes on the negative pole side and of the electrodes on the positive pole side are automatically reversed at regular intervals to peel off the scale adhered to the surfaces of the electrodes on the negative pole side. Even with this purifying apparatus, however, the scale firmly and solidly adhered to the surfaces of the electrodes cannot be practically peeled off; i.e., scale partly remains on the electrodes, and the remaining scale accumulates gradually to finally interrupt the flow of electric current and making it difficult to purify the cooling water. Service personnel must peel and remove the scale solidly adhered on the surfaces of the negative electrodes, still requiring cumbersome maintenance and management of the purifying apparatus and increased cost.

The purifying apparatus of this type uses, as electrodes, expensive noble metal materials such as Pt or such materials as SUS and Fe that wear out easily, posing a problem in that the apparatus becomes expensive and high running cost is required.

It is therefore an object of this invention to provide a method of purifying water which requires least work for the maintenance and management without the need of cumbersome cleaning operation for removing the scale in an electrolytic purifying vessel by taking out the electrodes from the electrolytic purifying vessel, and an apparatus therefor.

According to the method of purifying water of the invention, water to be purified is flowed between the opposing electrodes, and a DC voltage is applied across the electrodes so that cations in the water to be treated are electrolytically precipitated on the negative electrodes to thereby purify the water to be treated.

As for the electrodes, titanium is used as the positive electrodes, and aluminum or an aluminum alloy is used for the negative electrodes. Further, electric current flows through an anodically oxidized film formed on the surfaces of the positive electrodes, the electric current being large enough to apply a voltage that is capable of dielectrically breaking down the anodically oxidized films. At the same time, the surfaces of the negative electrodes are electrolytically corroded to peel off and remove the scale which are electrolytically precipitated and solidly adhered on the surfaces of the negative electrodes.

Further, the applied voltage may be elevated by flowing a predetermined current through the anodically oxidized film being formed. In this case, the electric current flowing between the electrodes is preferably 0.1 to 20 A, and more preferably 1 A to 10 A, per a unit area (1 m²) of the positive electrodes. If the electric current is smaller than 0.1 A/m², the circulating cooling water cannot be sufficiently purified. If the electric current exceeds 20 A/m², the positive electrodes are quickly corroded and can no longer be used.

Further, when the electric conductivity of the water to be treated is higher than a predetermined value A, the electric current flowing between the electrodes may be increased, and when the electric conductivity of the water to be treated is lower than a predetermined value B, the electric current flowing between the electrodes may be decreased, the predetermined value A and the predetermined value B maintaining a relationship A ≥ B. The predetermined value A of electric conductivity of the water to be treated is preferably 100 to 3000 µS/cm and the predetermined value B thereof is preferably 100 to 3000 µS/cm. More preferably, the predetermined value A is 700 to 800 µS/cm and the predetermined value B is 700 to 800 µS/cm.

When the oxidation-reduction potential of the water to be treated is higher than a predetermined value C, the electric current flowing between the electrodes may be increased, and when the oxidation-reduction potential of the water to be treated is lower than a predetermined value D, the electric current flowing between the electrodes may decreased, the predetermined value C and the predetermined value D maintaining a relationship C ≥ D. The predetermined value C of oxidation-reduction potential is preferably +100 to -100 mV and the predetermined value D thereof is preferably +100 to -100 mV. More preferably, the predetermined value C is -40 to -60 mV and the predetermined value D is -40 to -60 mV.

Further, the apparatus for purifying water according to the invention includes an electrolytic vessel for receiving and draining the water to be purified, one or more positive electrodes disposed in the electrolytic vessel, one or more negative electrodes disposed in the electrolytic vessel maintaining a predetermined gap to the positive electrodes, and a DC source for applying a DC voltage across the positive electrodes and the negative electrodes for peeling and removing an anodically oxidized film formed on the surfaces of the first electrodes by dielectric breakdown.

The positive electrodes comprise titanium and are connected to the positive output terminal of the DC source, while the negative electrodes comprise aluminum or an aluminum alloy and are connected to the negative output terminal of the DC source.
The apparatus for purifying water according to the invention also includes an ammeter for measuring a value of electric current flowing between the electrodes, and a power source controller which, when the current value measured by the ammeter is smaller than a predetermined value, increases the output voltage of the DC source to increase the current flowing between the electrodes and, when the current value measured by the ammeter is greater than the predetermined value, decreases the output voltage of the DC source to decrease the current flowing between the electrodes

The positive electrodes and the negative electrodes may have the shape of plates, round rods or square rods. These electrodes may be arranged opposing each other in the same shape or in different shapes. The positive electrodes and the negative electrodes, particularly the negative electrodes, may be covered with mesh protection bags having a mesh size of 100 µm to 10 µm.

The DC source applies a voltage to an anodically oxidized film formed on the surfaces of positive electrodes to peel off and remove the anodically oxidized film by dielectric breakdown. It is desired that the DC source is a constant-current power source that flows a constant current of 0.1 to 20 A per a unit area (1 m²) of the positive electrodes, between the positive electrodes and the negative electrodes.

The apparatus for purifying water according to the invention may include a conductivity meter for measuring the electric conductivity of the water to be treated, and a current controller which, when the electric conductivity measured by the conductivity meter is higher than a predetermined value A, increases the output voltage of the DC source to increase the electric current that flows between the electrodes, and when the electric conductivity measured by the conductivity meter is lower than a predetermined value B, decreases the output voltage of the DC source to decrease the electric current that flows between the electrodes, the predetermined value A and the predetermined value B maintaining a relationship A ≥ B. It is desired that the predetermined value A of electric conductivity is 100 to 3000 µS/cm and the predetermined value B thereof is 100 to 3000 µS/cm.

The apparatus for purifying water according to the invention may include an oxidation-reduction potential meter for measuring the oxidation-reduction potential of the water to be treated, and a current controller which, when the oxidation-reduction potential measured by the oxidation-reduction potential meter is higher than a predetermined value C, increases the output voltage of the DC source to increase the electric current that flows between the electrodes, and when the oxidation-reduction potential measured by the oxidation-reduction potential meter is lower than a predetermined value D, decreases the output voltage of the DC source to decrease the electric current that flows between the electrodes, the predetermined value C and the predetermined value D maintaining a relationship C ≥ D. It is desired that the predetermined value C of oxidation-reduction potential of the water to be treated is +100 to -100 mV and the predetermined value D thereof is +100 to -100 mV.

According to the invention, electric current flows in the water to be treated despite the formation of the anodically oxidized film, in an amount necessary for compulsively and dielectrically breaking down the anodically oxidized film formed on the surfaces of positive electrodes to remove the scale. Therefore, the scale in water to be treated is efficiently removed, and the electric conductivity of the water to be treated is maintained within a predetermined range.

According to the invention, further, the surfaces of negative electrodes are electrolytically corroded while the water to be treated is being purified. Therefore, scale electrolytically precipitated on the surfaces of the negative electrodes is efficiently peeled off and removed together with the material of negative electrodes, and the electric conductivity of the water to be treated is maintained within a predetermined range.

According to the present invention, further, the rate of electrolytic corrosion of the surfaces of negative electrodes can be retarded depending upon the shape of positive and negative electrodes, and the life of negative electrodes can be extended by a suitable combination of the shapes. For example, the life of negative electrodes can be more than doubled when the positive electrodes have the shape of plates and the negative electrodes have the shape of round rods, as compared to when the positive electrodes and the negative electrodes both have the shape of plates.

According to the present invention, further, titanium dioxide and titanium pieces are peeled off the electrodes as the positive electrodes are subject to dielectrical breakdown, and aluminum pieces are peeled off the electrodes as the negative electrodes are electrolytically corroded. These pieces, however, may be trapped by a mesh-like protection bag covering the electrodes, and do not directly deposit in the bottom of the apparatus or do not interrupt the flow of water, preventing the occurrence of such a circumstance that the drain valve of the drain device is clogged.

According to the present invention, further, scale adhered and grown on the surfaces of negative electrodes is removed free of maintenance without requiring the removing operation by the workers, offering an advantage of decreased maintenance and management cost.

According to the present invention, further, the voltage applied to the electrodes is not necessary to be switched for its polarities at regular intervals. Therefore, the electric control does not become complex, and the apparatus can be manufactured at a decreased cost.

According to the present invention, further, the electric current flowing between the electrodes may be increased when the electric conductivity of water to be treated becomes higher than a predetermined value, whereby the anodically oxidized film formed on the surfaces of the positive electrodes is compulsively and dielectrically broken down, and an electric current of an amount necessary for removing the scale flows in the water despite the formation of the anodically oxidized film. Therefore, the scale in water is efficiently removed. Further, the electric current flowing between the electrodes decreases when the electric conductivity of the water to be treated becomes lower than a predetermined value, to reduce the consumption of the electrodes.

According to the present invention, further, the electric current flowing between the electrodes may be increased when the oxidation-reduction potential of water to be treated becomes higher than a predetermined value, the anodically oxidized film formed on the surfaces of the positive electrodes is compulsively and dielectrically broken down, and an electric current of an amount necessary for removing the scale flows in water despite the formation of the anodically oxidized film. Therefore, the scale in water is efficiently removed. Further, the electric current flowing between the electrodes decreases when the oxidation-reduction potential of the water to be treated becomes lower than a predetermined value, to reduce the consumption of the electrodes.

### BRIEP DESCRIPTION OF THE DRAWINGS

Fig. 1 is a view illustrating an apparatus for purifying cooling water in a cooling tower according to an embodiment of the invention.
Fig. 2 is a view illustrating a first example of an electrode unit used for the purifying apparatus of Fig. 1.
Fig. 3 is a view illustrating a second example of the electrode unit used for the purifying apparatus of Fig. 1.
Fig. 4 is a view illustrating a third example of the electrode unit used for the purifying apparatus of Fig. 1.
Fig. 5 is a view illustrating a fourth example of the electrode unit used for the purifying apparatus of Fig. 1.
Fig. 6 is a view illustrating a fifth example of the electrode unit used for the purifying apparatus of Fig. 1.
Fig. 7 is a view illustrating a control mechanism in the purifying apparatus of Fig. 1.
Fig. 8 is a view illustrating an air-conditioning system incorporating the purifying apparatus of Fig. 1.
Fig. 9 is a graph showing changes in the voltage (V) across the electrodes when a constant current is flown between the electrodes with the elapse of days.
Fig. 10 includes graphs showing changes in the electric conductivity (µS/cm) of water to be treated when a constant current is flown between the electrodes with the elapse of days.
Fig. 11 includes graphs showing changes in the oxidation-reduction potential (mV) of water to be treated when a constant current is flown between the electrodes with the elapse of days.
Fig. 12 includes graphs showing changes in the conductivity (µS/cm) of water to be treated when an electric current is flown between the electrodes while varying the current density (A/m²).
Fig. 13 includes graphs showing changes of decrease in the electric conductivity (COND) depending upon differences in the current density.
Fig. 14 includes graphs showing shifts of decrease in the electric conductivity depending upon the materials of negative electrodes.
Fig. 15 includes graphs showing increase and decrease in the conductivity (µS/cm) of water to be treated when an electric current flown between the electrodes is increased and decreased.
Fig. 16 includes graphs showing increase and decrease in the oxidation-reduction potential (mV) of water to be treated when an electric current flown between the electrodes is increased and decreased.
Fig. 17 is a graph showing shifts in the voltage (V) when an electric current is flown between the electrodes in water to be treated depending upon the shapes of the negative electrodes.
Fig. 18 is a view illustrating an air-conditioning system.

### BEST MODE FOR CARRYING OUT THE INVENTION

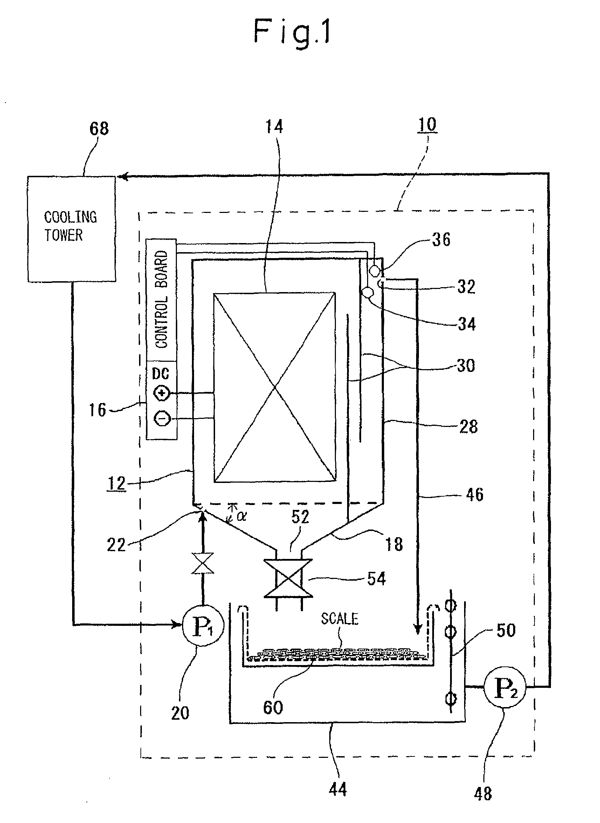

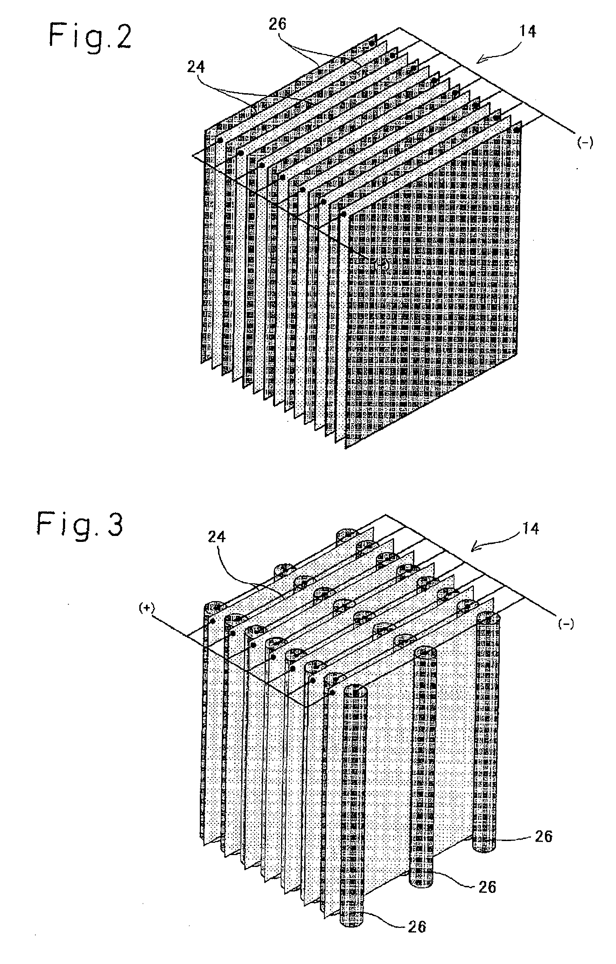

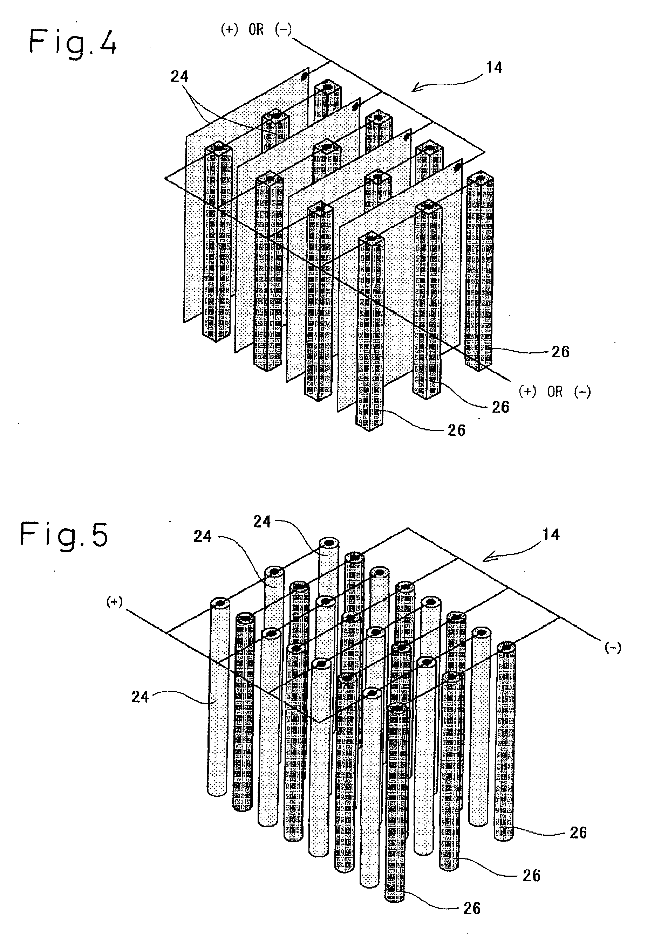

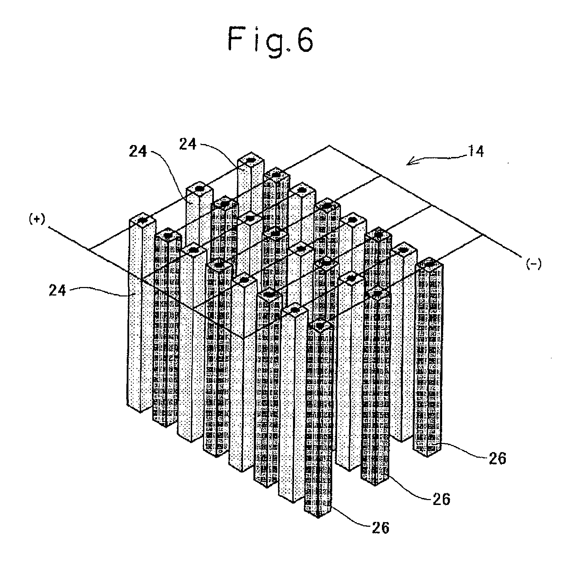

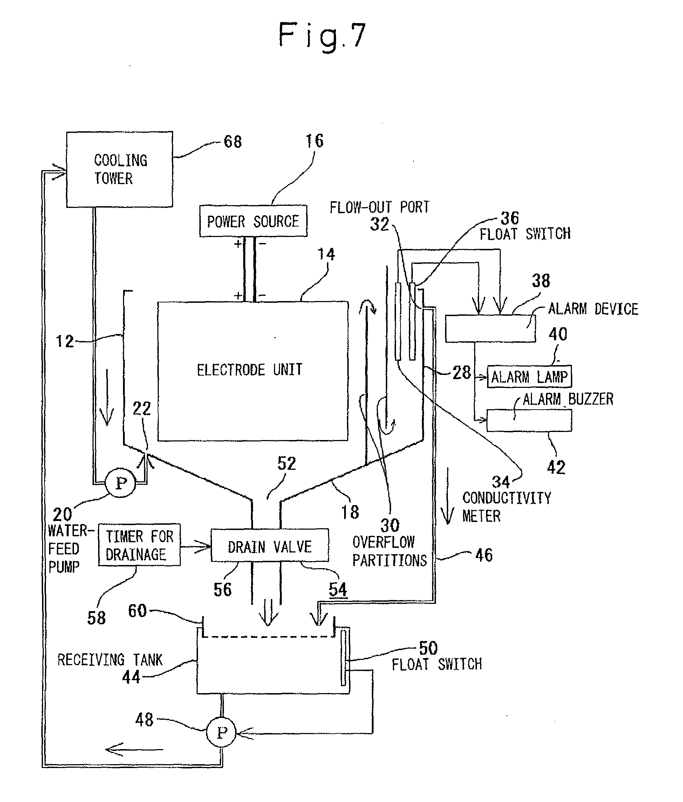

Fig. 1 is a view illustrating an apparatus for purifying cooling water of a cooling tower according to an embodiment of the invention, Fig. 2 is a view illustrating a first example of an electrode unit used for the purifying apparatus of Fig. 1, Fig. 3 is a view illustrating a second example of the electrode unit used for the purifying apparatus of Fig. 1, Fig. 4 is a view illustrating a third example of the electrode unit used for the purifying apparatus of Fig. 1, Fig. 5 is a view illustrating a fourth example of the electrode unit used for the purifying apparatus of Fig. 1, Fig. 6 is a view illustrating a fifth example of the electrode unit used for the purifying apparatus of Fig. 1, and Fig. 7 is a view illustrating a control mechanism in the purifying apparatus of Fig. 1.

In these drawings, reference numeral 10 denotes a purifying apparatus which includes an electrolytic purifying vessel 12, an electrode unit 14 placed in the electrolytic purifying vessel 12, and a DC source 16 for feeding a direct current to the electrode unit 14.

The electrolytic purifying vessel 12 comprises a box-like container and has a water-feed port 22 provided in a bottom portion 18 of the electrolytic purifying vessel 12 at a position close to the side portion of the electrolytic purifying vessel 12 to receive the cooling water drained from a water-receiving vessel 74 of a cooling tower 68 via a water-feed pump 20. The sizes (capacities) of the electrolytic purifying vessel 12 and of the water-feed pump 20 are designed depending upon the size (capacity) of the cooling tower 68.

The electrode unit 14 comprises positive electrodes 24 and negative electrodes 26, the electrodes 24 and the electrodes 26 being alternately arranged facing to each other maintaining a predetermined gap. In an example shown in Fig. 2, the electrodes 24, 26 in the electrode unit have the shape of plates. However, various types of electrodes can be employed. As shown in Figs. 3 and 4, for example, the electrodes of the one polarity may have the shape of plates, the electrodes of the other polarity may have the shape of rods, and a row of a plurality of rod-like electrodes may be arranged facing the plate-like electrodes maintaining a predetermined gap. As shown in Figs. 5 and 6, the electrodes of either polarity may be a row of a plurality of rods, and the electrodes of the two polarities may be arranged in parallel facing each other maintaining a predetermined gap.

The positive electrodes 24 comprise titanium while the negative electrodes 26 comprise aluminum or an aluminum alloy. The size of the electrode unit 14 is designed depending upon the size (capacity) of the cooling tower 68.

The electrodes 24 of the electrode unit 14 are connected to a positive output terminal of the DC source 16 while the electrodes 26 are connected to a negative output terminal of the DC source 16. The DC source 16 is a regulated DC power supply capable of flowing an electric current of about 0.1 to about 20 A per a unit area (1 m²) of the positive electrodes 24.

Two pieces of parallel overflow partitions 30 are provided between the side portion 28 of the electrolytic purifying vessel 12 and the electrode unit 14 at a place on the opposite side of the water-feed port 22, these partitions being slightly deviated up and down, and oriented nearly vertically maintaining a predetermined gap. A flow-out port 32 is provided in the side portion 28 of the electrolytic purifying vessel 12 at an upper position on the side where the overflow partitions 30 are provided to flow out the purified cooling water.

Referring to Fig. 7, a conductivity meter 34 for measuring the electric conductivity of the cooling water is provided between the side portion 28 of the electrolytic purifying vessel 12 and the overflow partitions 30 near the flow-out port 32. The conductivity meter 34 is connected to an alarm device 38 and turns an alarm lamp 40 on or sounds an alarm buzzer 42 in case the electric conductivity of the cooling water becomes greater than a predetermined value.

A float switch 36 is installed at an upper part of the electrolytic purifying vessel 12. The float switch 36 turns the alarm lamp 40 on and sounds the alarm buzzer 42 when the scale builds up on a filtering portion 60 of a receiving tank 44 causing a resistance against the flow of the treated water and preventing the drain from the electrolytic purifying vessel 12.

The receiving tank 44 is provided under the electrolytic purifying vessel 12 to temporarily store the circulating cooling water purified through the electrolytic purifying vessel 12. The flow-out port 32 is associated with the receiving tank 44 via a flow-out line 46.

A return pump 48 is provided near the receiving tank 44 to return the cooling water in the receiving tank 44 back to the cooling tower 68. A float switch 50 is provided in the receiving tank 44 to operate the return pump 48 when the level of cooling water that is received becomes higher than a predetermined level and to return the cooling water in the receiving tank 44 back to the cooling tower 68.

A drain port 52 is provided in the bottom portion 18 of the electrolytic purifying vessel 12 near the center thereof to drain the scale that is peeled off. The bottom portion 18 of the electrolytic purifying vessel 12 is inclined to become lower toward the drain port 52, the angle α of inclination lying in a range of 25 degrees to 35 degrees.

A drain device 54 is provided facing downward on the back side of the bottom portion 18 of the electrolytic purifying vessel 12 at a portion where the drain port 52 is provided. The drain device 54 has a drain valve 56 which is an opening/closing device. The drain valve 56 is controlled for its timing and time for opening/closing by a timer 58 for drainage.

The flow-out side of the drain device 54 is opened without being connected to another line. The filtering portion 60 is provided just under the drain device 54 and over the receiving tank 44 to separate the scale drained together with the cooling water.

The drain device 54 has a draining capability, i.e., a maximum flow rate of drained water of 30 liters/minute or larger when the water is filled in the electrolytic purifying vessel 12 up to a predetermined height and the drain valve 56 is fully opened, so that the scale accumulated in the bottom portion 18 of the electrolytic purifying vessel 12 is drained by the force of water.

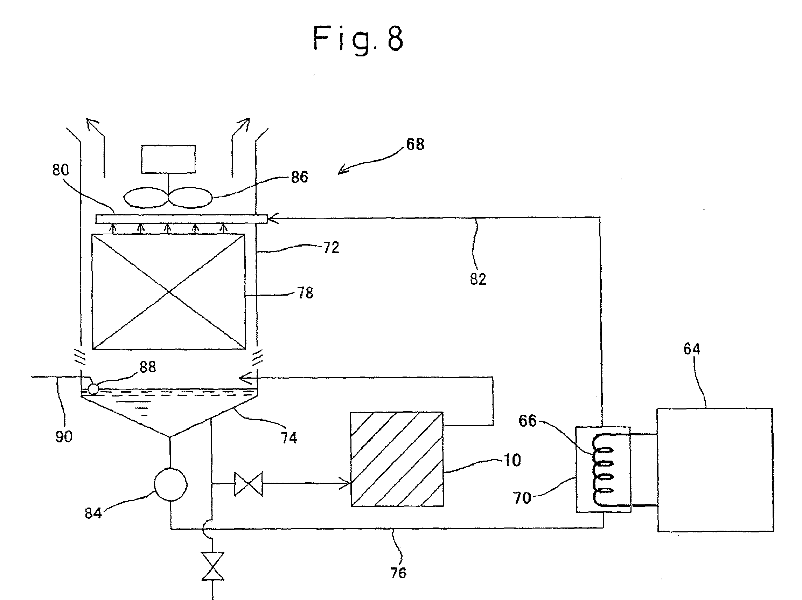

Next, operation of the apparatus for purifying cooling water in the cooling tower will be described with reference to Figs. 7 and 8.

First, when the water-feed pump 20 is operated, cooling water in a water-receiving vessel 74 of the cooling tower 68 is sucked out and is fed into the electrolytic purifying vessel 12 through the water-feed port 22 of the electrolytic purifying vessel 12.

The supplied cooling water submerges the electrode unit 14, flows between the overflow partitions 30, flows to the exterior of the electrolytic purifying vessel 12 through the flow-out port 32, and enters into the receiving tank 44.

The float switch 50 of the receiving tank 44 is adjusted such that the switch is turned on at a predetermined height. When the amount of cooling water in the receiving tank 44 reaches a preset height, the float switch 50 is turned on, the return pump 48 operates, and the cooling water that has entered into the receiving tank 44 is returned by the return pump 48 back to the water-receiving vessel 74 of the cooling tower 68.

When the DC source 16 is turned on in a state where the electrolytic purifying vessel 12 is filled with the cooling water, a positive voltage is applied to the electrodes 24, a negative voltage is applied to the electrodes 26, whereby cations such as calcium ions and magnesium ions as well as dissolved silica contained in water are attracted by the electrodes 26, are reduced on the surfaces of electrodes 26, and precipitate as scale on the surfaces or near the surfaces of the electrodes 26. Therefore, cations in the cooling water gradually decrease.

However, if the applied voltage is maintained constant, the surfaces of the electrodes 24 to which the positive voltage is applied are anodically oxidized gradually forming an anodically oxidized film and, therefore, causing the electric current to flow little and making it gradually difficult to remove the scale. Therefore, the electric current is increased to elevate the voltage across the electrodes to thereby dielectrically break down the anodically oxidized film and to peel the anodically oxidized film off the electrodes, allowing the current to easily flow.

When water is continuously purified by the electrolysis, scale precipitates on the surfaces or near the surfaces of the electrodes 26 and solidly adheres onto the surfaces of the electrodes 26. Further, as the electrodes 26 electrolytically corrode, aluminum pieces and scale gradually accumulate as sludge on the bottom portion 18 of the electrolytic purifying vessel 12.

Next, the operation time and the holding time are preset to the timer 58 for drainage. After the preset operation time has passed, the timer 58 for drainage opens the drain valve 56, and water in the electrolytic purifying vessel 12 is drained together with the scale built up on the bottom portion 18 through the drain device 54.

The scale in the drained water is removed by filtration through the filtering portion 60, and the water enters into the receiving tank 44. The drain valve 56 is closed after the elapse of the preset holding time, and the electrolytic purifying vessel 12 is refilled with water. The scale remaining in the filtering portion 60 is successively conveyed out and removed after having built up to some extent.

The conductivity meter 34 provided near the flow-out port of the electrolytic purifying vessel 12 is measuring the electric conductivity of cooling water at all times. If the electric conductivity of water becomes greater than a preset value, the alarm device 38 is operated, the alarm lamp 40 turns on and the alarm buzzer 42 sounds.

The float switch 36 at an upper part of the electrolytic purifying vessel 12 monitors the rise of water level that stems from the scale building up in the filtering portion 60 of the receiving tank 44 causing a resistance against the flow of the treated water. If the resistance increases, the rise of the water level is sensed by the float switch 36 which, then, turns the alarm lamp 40 on and causes the alarm buzzer 42 to sound.

### EXAMPLES

### Example 1

Water in a cooling tower with a capacity of 120 refrigeration tons was drawn out from a circulation passage, fed into the apparatus of the invention to purify, and was returned back to the circulation passage after purified.

Two types of electrode units, i.e., type A and type B, were used as the electrode unit 14 of the apparatus of the invention. The electrode unit of the type A consisted of titanium plates and aluminum plates measuring 300 mm wide, 600 mm high and 1 mm thick each in a number of 36 pieces, i.e., a total of 72 pieces facing each other maintaining a pitch of 12.5 mm (see Fig. 2). The electrode unit of the type B consisted of 36 units in total faced to each other, each unit consisting of a titanium plate measuring 300 mm wide, 600 mm high and 1 mm thick and three round aluminum rods measuring 15 mm φ and 600 mm length (see Fig. 3). As the DC source 16, a regulated DC power supply was used, and a constant current of 6 A was fed to the electrode unit 14 from the DC source 16. A current density was 1 A/m².

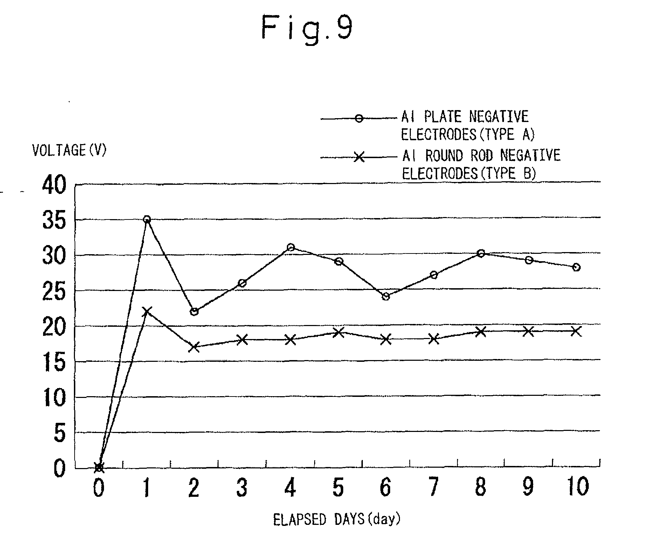

Referring to Fig. 9, the voltage across the electrodes of the electrode unit 14 of the type A gradually increased from 0.5 V, reached 35 V, thereafter, decreased down to 22V, and hovered between 22 V and 32 V. This is presumably due to that the anodically oxidized film gradually forms on the surfaces of the positive electrodes and is dielectrically broken down at 32 V allowing the current to easily flow, whereby the applied voltage decreases down to 22 V and the anodically oxidized film gradually forms again, the formation and breakdown of the anodically oxidized film taking place between 22 V and 32 V. On the other hand, the voltage across the electrodes of the electrode unit 14 of the type B, as shown in Fig. 9, gradually increased from 0.5 V, reached 22 V and, thereafter, hovered at around 18 V.

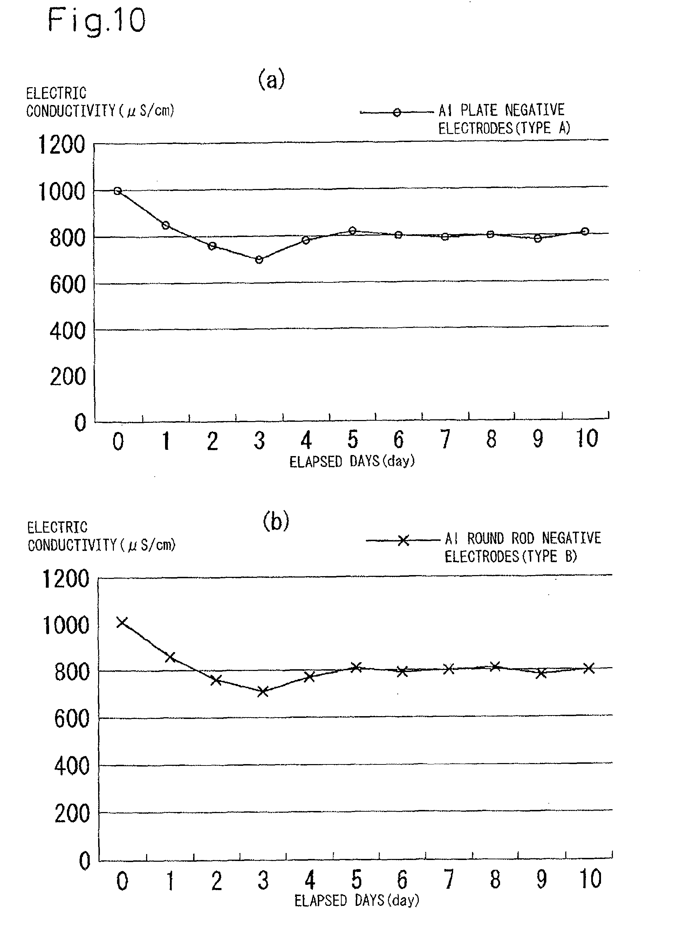

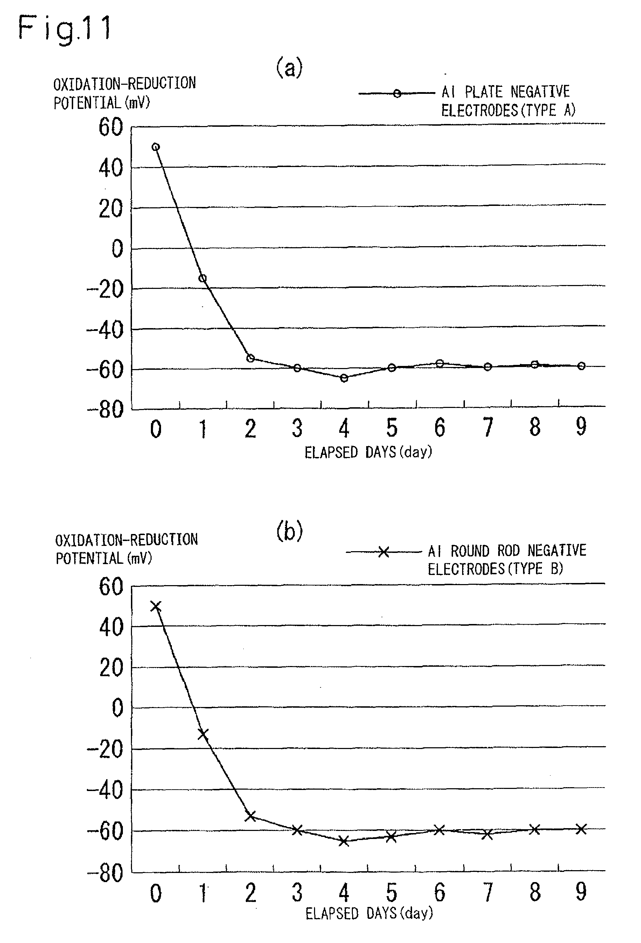

The electric conductivity of water in this case was 1000 µS/cm, at first, for the cases of the electrode units 14 of the type A and the type B as shown in Figs. 10(a) and 10(b). The electric conductivity of water, however, gradually decreased and stabilized at 700 to 820 µS/cm, exhibiting no large difference. The oxidation-reduction potential was 380 mV, at first, for the cases of the electrode units 14 of the type A and the type B as shown in Figs. 11(a) and 11(b). However, the oxidation-reduction potential gradually decreased and stabilized at -60 mV, exhibiting no large difference. A sludge-like substance precipitated on the bottom of the electrolytic vessel. Through the analysis, it was found that the sludge consisted chiefly of silica, calcium and magnesium.

### Example 2

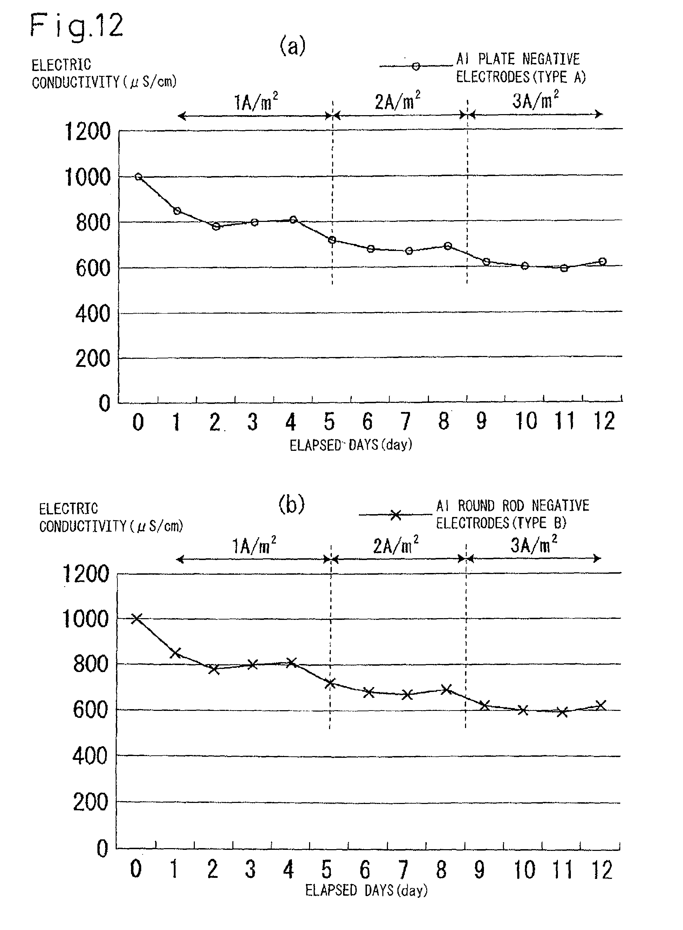

Water was circulated and treated by conducting a bench-top experiment on a scale of about 1/35 that of Example 1 while varying the density of electric current flowing into the electrode unit at three levels, i.e., 1 A/m², 2 A/m² and 3 A/m². The electric conductivities of water were as shown in Figs. 12(a) and 12(b). From this experiment, it was found that the electric conductivity of water could be further decreased by increasing the current density. However, there was no large difference in the decrease of electric conductivity of water for the cases of the electrode units 14 of the type A and the type B.

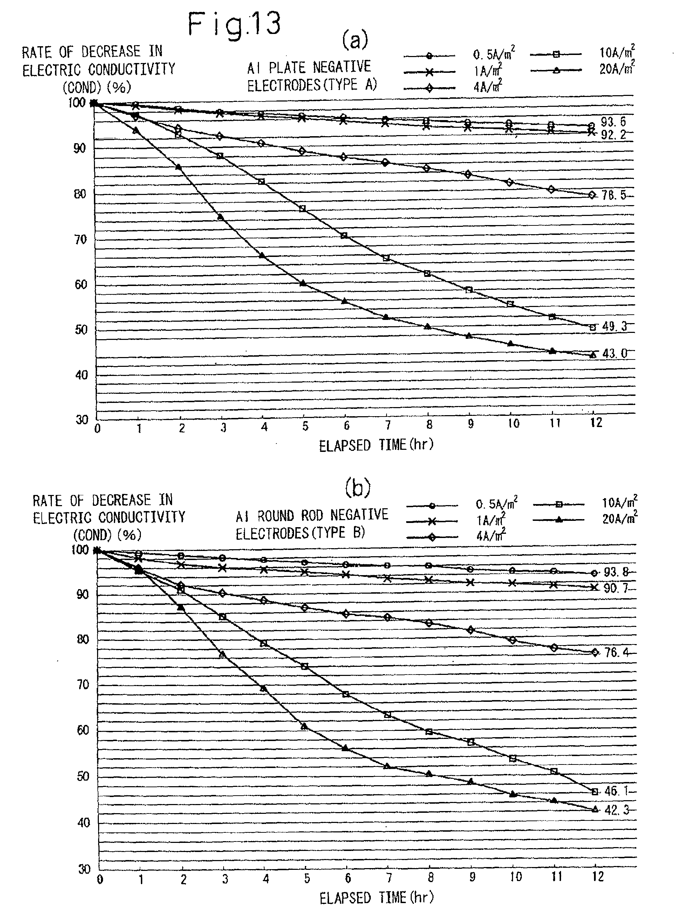

Further, water was circulated and treated by conducting a bench-top experiment on a scale of about 1/35 that of Example 1 while varying the density of electric current flowing into the electrode unit, i.e., 0.5 A/m², 1 A/m², 4 A/m², 10 A/m² and 20 A/m². The electric conductivities of water decreased as shown in Figs. 13(a) and 13(b). From this experiment, it was found that the electric conductivity (COND) of water quickly decreased with an increase in the current density. However, there was no large difference in the decrease of electric conductivity (COND) for the cases of the electrode units 14 of the type A and the type B.

### Example 3

The apparatus was continuously operated under the conditions of Example 1 for one week. Scale remained to some extent being solidly adhered on the surface of the electrodes but did not firmly adhere. The scale peeled off and deposited on the bottom of the electrolytic vessel without problem. There was no large difference in the deposition of scale that was peeled off, for the cases of the electrode units 14 of the type A and the type B.

Chemical analysis of the components indicated that the titanium components derived from the dielectric breakdown of the positive electrodes was about 40%, the aluminum components derived from the negative electrodes presumably due to the electrolytic corrosion was about 11%, and the remainder was those derived from the trapped scale, as shown in the upper column of Table 1. There was almost no difference in the components of scale for the cases of the electrode units 14 of the type A and the type B.

**Table 1**

| | Element | | | | | | |
|---|---|---|---|---|---|---|---|
| Kind of electrode plates | Ti | Al | Ca | Cl | Si | Mg | other oxides |
| Positive (Ti)/ Negative (Al) | 40 | 11.2 | 3.3 | 2.2 | 1.5 | 0.8 | 40.6 |
| Positive (Ti)/ Negative(Ti) | 57 | n.d. | 3.8 | 2.0 | 1.2 | 0.1 | 35.9 |

The negative electrodes were electrolytically corroded presumably due to that the hydrogen ion concentration (pH) was elevated near the negative electrodes by the electrolysis and the negative electrodes themselves were subject to alkali corrosion. For instance, when the scale formed in the same manner as in Example 1 were analyzed for their components, by using titanium plates as the negative electrodes which were the same as the positive electrodes, no aluminum component was detected as shown in the lower column of Table 1.

### Example 4

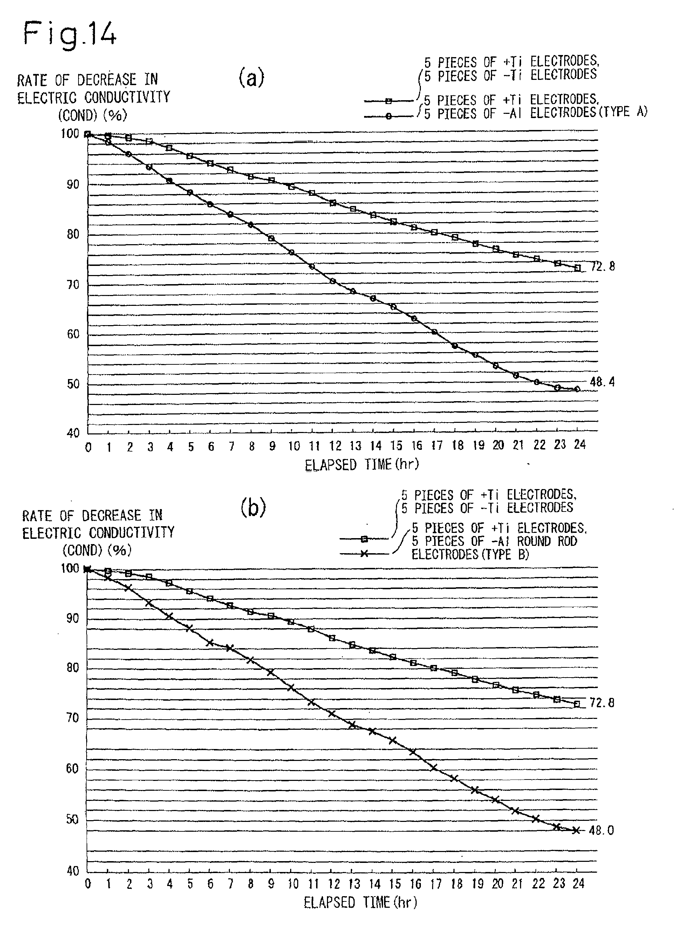

The electric conductivities and shift of the rate of decrease thereof were examined by using titanium plates, aluminum plates and aluminum rods as the electrodes 26 to obtain the results as shown in Figs. 14(a) and 14(b). From the results of Figs. 14(a) and 14(b), it was found that the electric conductivity decreased quicker when aluminum was used as the electrodes 26 than when titanium was used, and the purifying capability was higher.

### Example 5

By using a current controller, the amount of electric current fed to the electrode unit 14 from the DC source 16 was increased or decreased depending upon the electric conductivity measured by the conductivity meter 34 under the conditions of Example 1. That is, when the electric conductivity exceeded 1000 µS/cm, the electric current was increased by 100%. When the electric conductivity was smaller than 700 µS/cm, the electric current was returned back to the initial value.

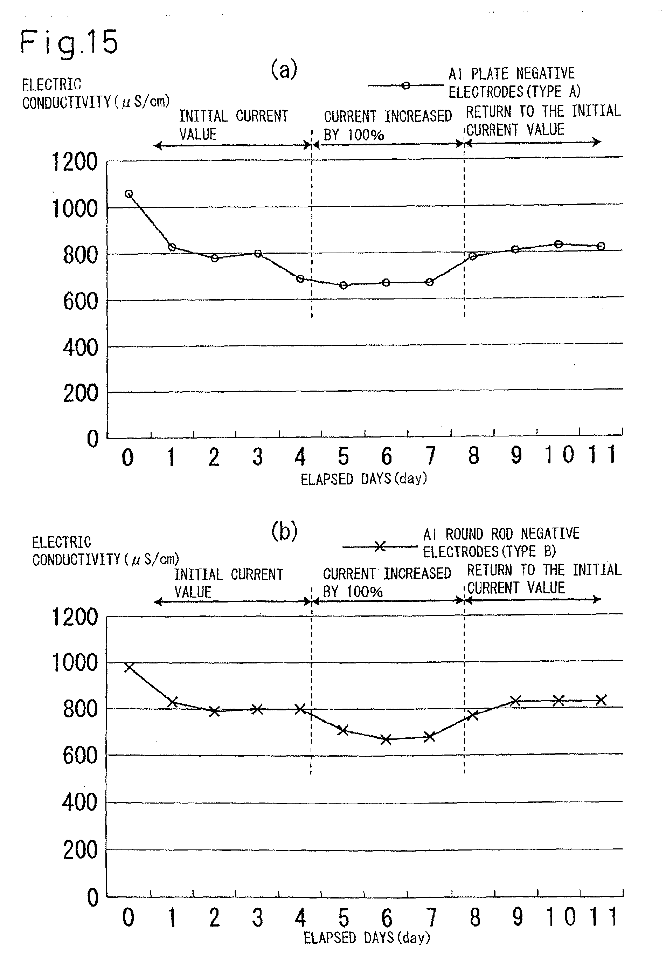

As a result, in the case of the electrode unit 14 of the type A, as shown in Fig. 15(a), when the electric current was increased by 100%, the electric conductivity decreased from 980 µS/cm down to 670 µS/cm and when the electric current was returned back to the initial value, the electric conductivity increased from 670 µS/cm to 820 µS/cm. On the other hand, in the case of the electrode unit 14 of the type B, as shown in Fig. 15(b), when the electric current was increased by 100%, the electric conductivity decreased from 980 µS/cm down to 670 µS/cm and when the electric current was returned back to the initial value, the electric conductivity increased from 670 µS/cm to 830 µS/cm.

It will be understood from the above results that a desired capability can be controlled by increasing or decreasing the electric current fed to the electrode unit 14.

Further, the scale in water was efficiently removed. When the electric conductivity is in an allowable range, further, the electric current does not have to be excessively fed contributing to saving electric charges and preventing the electrodes from being excessively corroded and worn out.

### Example 6

By using an oxidation-reduction potential meter for measuring the oxidation-reduction potential of water and the current controller, the amount of electric current fed to the electrode unit 14 from the DC source 16 was increased depending upon the oxidation-reduction potential measured by the oxidation-reduction potential meter like in Example 5. In other words, the electric current was increased by 100% when the oxidation-reduction potential has exceeded 200 mV.

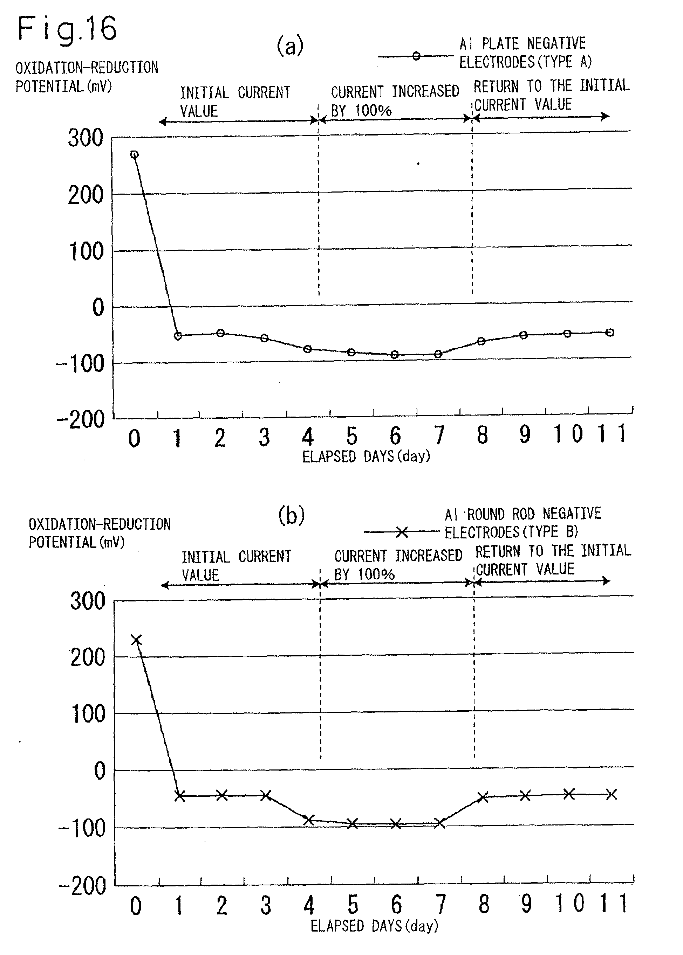

As a result, in the case of the electrode unit 14 of the type A, as shown in Fig. 16(a), when the electric current was increased by 100%, the oxidation-reduction potential changed from -58 mV to -90 mV and when the electric current was returned back to the initial value, the oxidation-reduction potential decreased down to -55 mV. On the other hand, in the case of the electrode unit 14 of the type B, as shown in Fig. 16(b), when the electric current was increased by 100%, the oxidation-reduction potential changed from -58 mV to -96 mV and when the electric current was returned back to the initial value, the oxidation-reduction potential decreased down to -48 mV.

It will be understood from the above results that a desired capability can be controlled by increasing or decreasing the electric current fed to the electrode unit 14.

Further, the scale in water was efficiently removed. When the oxidation-reduction potential is in an allowable range, further, the electric current does not have to be excessively fed contributing to saving electric charges and preventing the electrodes from being excessively corroded.

### Example 7

Experiment was conducted to examine a change in the voltage applied to the water to be treated and durability of the negative electrodes by using the electrode unit 14 of the type A in which the negative electrodes possessed the shape of plates and by using the electrode unit 14 of the type B in which the negative electrodes possessed the shape of rods.

The electrode unit 14 of the type A consisted of titanium plates (positive electrodes) and aluminum plates (negative electrodes) measuring 300 mm wide, 600 mm high and 1 mm thick each in a number of 36 pieces, i.e., a total of 72 pieces facing each other maintaining a pitch of 12.5 mm. The electrode unit 14 of the type B consisted of 36 units in total faced to each other, each unit consisting of a titanium plate (positive electrode) measuring 300 mm wide, 600 mm high and 1 mm thick and three round aluminum rods (negative electrodes) measuring 15 mm φ and 600 mm length.

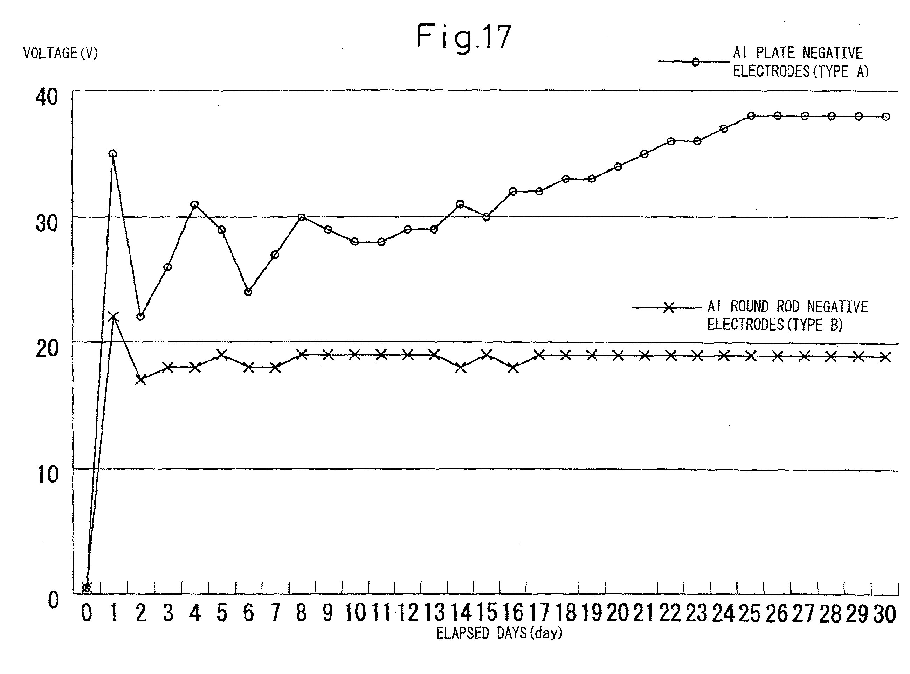

When aluminum plates were used as the negative electrodes as shown in Fig. 17, the voltage gradually increased, the electric resistance increased, electrolytic corrosion became vigorous, and the plate surfaces as a whole peeled like layers. As a result, a number of peeled pieces apparently occurred and the electrodes were worn out considerably. When round rods were used as the negative electrodes, on the other hand, the voltage was almost stable for 30 days, i.e., the voltage hovered around 18 to 22 V. Layers peeled like that of the aluminum plates were observed but gradually occurred from the bottom portion, presumably accounting for a stable shift of voltage. The electrodes appeared to wear out little and could be stably used thereafter.

### INDUSTRIAL APPLICABILITY

The present invention can be used not only for purifying water of a cooling tower but also for purifying circulating water for chilling, circulating water for a water cooler/heater, water replenished to a boiler, water replenished to a heat pump-type hot water feeder, water replenished to an electric hot water feeder, water replenished to a gas/petroleum hot water feeder, water for cooling a mold used in injection-molding machine or the like, water used for a humidifier, water used for an electric heating system such as induction heating furnace or the like, water (raw water) fed to an apparatus for producing pure water, water of a 24-hour-heated bath, water of a pool, water of an artificial pond, etc.

## Claims

1. A method of purifying water by applying a DC voltage across opposing electrodes while flowing water to be treated therebetween, so that cations in the water to be treated are electrolytically precipitated on the negative electrodes to thereby purify the water to be treated, wherein titanium is used as the positive electrodes, aluminum or an aluminum alloy is used as the negative electrodes, and electric current flows between the electrodes in an amount large enough for applying a voltage that is capable of dielectrically breaking down an anodically oxidized film formed on the surfaces of the positive electrodes.

2. The method of purifying water according to claim 1, wherein the electric current flowing between the electrodes is 0.1 to 20 A per a unit area (1 m²) of the positive electrodes.

3. The method of purifying water according to claim 1, wherein when the electric conductivity of the water to be treated is higher than a predetermined value A, the electric current flowing between the electrodes is increased and when the electric conductivity of the water to be treated is lower than a predetermined value B, the electric current flowing between the electrodes is decreased, the predetermined value A and the predetermined value B maintaining a relationship A ≥ B.

4. The method of purifying water according to claim 3, wherein the predetermined value A of electric conductivity of the water to be treated is 100 to 3000 µS/cm and the predetermined value B thereof is 100 to 3000 µS.

5. The method of purifying water according to claim 1, wherein when the oxidation-reduction potential of the water to be treated is higher than a predetermined value C, the electric current flowing between the electrodes is increased and when the oxidation-reduction potential of the water to be treated is lower than a predetermined value D, the electric current flowing between the electrodes is decreased, the predetermined value C and the predetermined value D maintaining a relationship C ≥ D.

6. The method of purifying water according to claim 5, wherein the predetermined value C of oxidation-reduction potential of the water to be treated is +100 to -100 mV and the predetermined value D thereof is +100 to -100 mV.

7. An apparatus for purifying water comprising:
an electrolytic vessel for receiving and draining water to be purified,
one or more first electrodes disposed in the electrolytic vessel,
one or more second electrodes disposed in the electrolytic vessel maintaining a predetermined gap to the first electrodes,
a DC source for applying a DC voltage across the first electrodes and the second electrodes for peeling and removing an anodically oxidized film formed on the surfaces of the first electrodes by dielectric breakdown,
an ammeter for measuring a value of electric current flowing between the electrodes, and a power source controller which, when the current value measured by the ammeter is smaller than a predetermined value, increases the output voltage of the DC source to increase the current flowing between the electrodes and, when the current value measured by the ammeter is greater than the predetermined value, decreases the output voltage of the DC source to decrease the current flowing between the electrodes,
wherein the first electrodes comprise titanium, the second electrodes comprise aluminum or an aluminum alloy, the first electrodes are connected to the positive output terminal of the DC source, the second electrodes are connected to the negative output terminal of the DC source.

8. The apparatus for purifying water according to claim 7, wherein the first electrodes have the shape of plates, round rods or square rods, the second electrodes have the shape of plates, round rods or square rods, and these electrodes are arranged opposing each other In the same shape or in different shapes.

9. The apparatus for purifying water according to claim 7 or 8, wherein the electrodes are covered with mesh protection bags having a mesh size of 100 µm to 10 cm.

10. The apparatus for purifying water according to claim 7, wherein the DC source is a constant-current power source that flows a constant current of 0.1 to 20 A per a unit area (1 m²) of the first electrodes functioning as positive electrodes, between the first electrodes and the second electrodes.

11. The apparatus for purifying water according to claim 7, further comprising a conductivity meter for measuring the electric conductivity of the water to be treated, and a power source controller which, when the electric conductivity measured by the conductivity meter is higher than a predetermined value A, increases the output voltage of the DC source to increase the electric current that flows between the electrodes and when the electric conductivity measured by the conductivity meter is lower than a predetermined value B, decreases the output voltage of the DC source to decrease the electric current that flows between the electrodes, the predetermined value A and the predetermined value B maintaining a relationship A ≥ B.

12. The apparatus for purifying water according to claim 11, wherein the predetermined value A of electric conductivity of the water to be treated is 100 to 3000 µS/cm and the predetermined value B thereof is 100 to 3000 µS/cm.

13. The apparatus for purifying water according to claim 7, further comprising an oxidation-reduction potential meter for measuring the oxidation-reduction potential of the water to be treated, and a current controller which, when the oxidation-reduction potential measured by the oxidation-reduction potential meter is higher than a predetermined value C, increases the output voltage of the DC source to increase the electric current that flows between the electrodes and when the oxidation-reduction potential measured by the oxidation-reduction potential meter is lower than a predetermined value D, decreases the output voltage of the DC source to decrease the electric current that flows between the electrodes, the predetermined value C and the predetermined value D maintaining a relationship C ≥ D.

14. The apparatus for purifying water according to claim 13, wherein the predetermined value C of oxidation-reduction potential of the water to be treated is +100 to -100 mV and the predetermined value D thereof is +100 to -100 mV.

## Patentansprüche

1. Verfahren zum Reinigen von Wasser durch Anlegen einer Gleichspannung über gegenüber liegende Elektroden, während Wasser, das behandelt werden soll, dazwischen strömt, so dass Kationen in dem Wasser, das behandelt werden soll, an den negativen Elektroden elektroytisch abgeschieden werden, wodurch das Wasser, das behandelt werden soll, gereinigt wird, wobei Titan als positive Elektroden verwendet wird, Aluminium oder eine Aluminiumlegierung als negative Elektroden verwendet wird, und ein elektrischer Strom zwischen den Elektroden in einem Ausmaß fließt, das groß genug zum Anlegen einer Spannung ist, die einen anodisch oxidierten Film, der auf den Oberflächen der positiven Elektroden ausgebildet worden ist, einem dielektrischen Durchschlag unterziehen kann.

2. Verfahren zum Reinigen von Wasser nach Anspruch 1, bei dem der elektrische Strom, der zwischen den Elektroden fließt, 0,1 bis 20 A pro Einheitsfläche (1 m²) der positiven Elektroden beträgt.

3. Verfahren zum Reinigen von Wasser nach Anspruch 1, bei dem dann, wenn die elektrische Leitfähigkeit des Wassers, das behandelt werden soll, höher ist als ein vorgegebener Wert A, der elektrische Strom, der zwischen den Elektroden fließt, größer gemacht wird, und wenn die elektrische Leitfähigkeit des Wassers, das behandelt werden soll, niedriger ist als ein vorgegebener Wert B, der elektrische Strom, der zwischen den Elektroden fließt, kleiner gemacht wird, wobei der vorgegebene Wert A und der vorgegebene Wert B der Beziehung A ≥ B genügen.

4. Verfahren zum Reinigen von Wasser nach Anspruch 3, bei dem der vorgegebene Wert A der elektrischen Leitfähigkeit des Wassers, das behandelt werden soll, 100 bis 3000 µS/cm beträgt, und deren vorgegebener Wert B 100 bis 3000 µS beträgt.

5. Verfahren zum Reinigen von Wasser nach Anspruch 1, bei dem dann, wenn das Oxidations-Reduktionspotenzial des Wassers, das behandelt werden soll, höher ist als ein vorgegebener Wert C, der elektrische Strom, der zwischen den Elektroden fließt, größer gemacht wird, und wenn das Oxidations-Reduktionspotenzial des Wassers, das behandelt werden soll, niedriger ist als ein vorgegebener Wert D, der elektrische Strom, der zwischen den Elektroden fließt, kleiner gemacht wird, wobei der vorgegebene Wert C und der vorgegebene Wert D der Beziehung C ≥ D genügen.

6. Verfahren zum Reinigen von Wasser nach Anspruch 5, bei dem der vorgegebene Wert C des Oxidations-Reduktionspotenzials des Wassers, das behandelt werden soll, +100 bis -100 mV beträgt, und dessen vorgegebener Wert D +100 bis -100 mV beträgt.

7. Vorrichtung zum Reinigen von Wasser, umfassend:
einen Elektrolysebehälter zum Aufnehmen und Abgeben von Wasser, das gereinigt werden soll,
eine oder mehrere erste Elektrode(n), die in dem Elektrolysebehälter angeordnet ist oder sind,
eine oder mehrere zweite Elektrode(n), die in dem Elektrolysebehälter angeordnet ist oder sind, wobei ein vorgegebener Abstand zu den ersten Elektroden beibehalten wird,
eine Gleichstromquelle zum Anlegen einer Gleichspannung über die ersten Elektroden und die zweiten Elektroden zum Ablösen und Entfernen eines anodisch oxidierten Films, der auf den Oberflächen der ersten Elektroden gebildet worden ist, durch dielektrischen Durchschlag,
ein Amperemeter zum Messen eines Werts des elektrischen Stroms, der zwischen den Elektroden fließt, und eine Stromquellensteuereinrichtung, die, wenn der Stromwert, der durch das Amperemeter gemessen worden ist, kleiner ist als ein vorgegebener Wert, die Ausgangsspannung der Gleichstromquelle erhöht, so dass der Strom, der zwischen den Elektroden fließt, größer gemacht wird, und wenn der Stromwert, der durch das Amperemeter gemessen worden ist, größer ist als der vorgegebene Wert, die Ausgangsspannung der Gleichstromquelle vermindert, so dass der Strom, der zwischen den Elektroden fließt, kleiner gemacht wird,
wobei die ersten Elektroden Titan umfassen, die zweiten Elektroden Aluminium oder eine Aluminiumlegierung umfassen, wobei die ersten Elektroden mit dem positiven Ausgangsanschluss der Gleichstromquelle verbunden sind und die zweiten Elektroden mit dem negativen Ausgangsanschluss der Gleichstromquelle verbunden sind.

8. Vorrichtung zum Reinigen von Wasser nach Anspruch 7, bei der die ersten Elektroden die Form von Platten, runden Stäben oder quadratischen Stäben aufweisen, die zweiten Elektroden die Form von Platten, runden Stäben oder quadratischen Stäben aufweisen und diese Elektroden einander gegenüber liegend in der gleichen Form oder in verschiedenen Formen angeordnet sind.

9. Vorrichtung zum Reinigen von Wasser nach Anspruch 7 oder 8, bei der die Elektroden mit Netzschutzbeuteln mit einer Maschengröße von 100 µm bis 10 cm bedeckt sind.

10. Vorrichtung zum Reinigen von Wasser nach Anspruch 7, bei der die Gleichstromquelle eine Konstantstromquelle ist, die einen konstanten Strom von 0,1 bis 20 A pro Einheitsfläche (1 m²) der ersten Elektroden, die als positive Elektroden wirken, zwischen den ersten Elektroden und den zweiten Elektroden liefert.

11. Vorrichtung zum Reinigen von Wasser nach Anspruch 7, die ferner ein Leitfähigkeitsmessgerät zum Messen der elektrischen Leitfähigkeit des Wassers, das behandelt werden soll, und eine Stromquellensteuereinrichtung umfasst, die, wenn die elektrische Leitfähigkeit, die durch das Leitfähigkeitsmessgerät gemessen worden ist, höher ist als ein vorgegebener Wert A, die Ausgangsspannung der Gleichstromquelle erhöht, so dass der elektrische Strom, der zwischen den Elektroden fließt, größer gemacht wird, und wenn die elektrische Leitfähigkeit, die durch das Leitfähigkeitsmessgerät gemessen worden ist, niedriger ist als ein vorgegebener Wert B, die Ausgangsspannung der Gleichstromquelle vermindert, so dass der elektrische Strom, der zwischen den Elektroden fließt, kleiner gemacht wird, wobei der vorgegebene Wert A und der vorgegebene Wert B der Beziehung A ≥ B genügen.

12. Vorrichtung zum Reinigen von Wasser nach Anspruch 11, bei welcher der vorgegebene Wert A der elektrischen Leitfähigkeit des Wassers, das behandelt werden soll, 100 bis 3000 µS/cm beträgt, und deren vorgegebener Wert B 100 bis 3000 µS/cm beträgt.

13. Vorrichtung zum Reinigen von Wasser nach Anspruch 7, die ferner ein Oxidations-Reduktionspotenzial-Messgerät zum Messen des Oxidations-Reduktionspotenzials des Wassers, das behandelt werden soll, und eine Stromsteuereinrichtung umfasst, die, wenn das Oxidations-Reduktionspotenzial, das durch das Oxidations-Reduktionspotenzial-Messgerät gemessen wird, höher ist als ein vorgegebener Wert C, die Ausgangsspannung der Gleichstromquelle erhöht, so dass der elektrische Strom, der zwischen den Elektroden fließt, größer gemacht wird, und wenn das Oxidations-Reduktionspotenzial, das durch das Oxidations-Reduktionspotenzial-Messgerät gemessen wird, niedriger ist als ein vorgegebener Wert D, die Ausgangsspannung der Gleichstromquelle vermindert, so dass der elektrische Strom, der zwischen den Elektroden fließt, kleiner gemacht wird, wobei der vorgegebene Wert C und der vorgegebene Wert D der Beziehung C ≥ D genügen.

14. Vorrichtung zum Reinigen von Wasser nach Anspruch 13, bei welcher der vorgegebene Wert C des Oxidations-Reduktionspotenzials des Wassers, das behandelt werden soll, +100 bis -100 mV beträgt, und dessen vorgegebener Wert D +100 bis -100 mV beträgt.

## Revendications

1. Procédé de purification d'eau en appliquant une tension en cc en travers des électrodes opposées tout en faisant couler l'eau à traiter entre elles, de telle sorte que les cations dans l'eau à traiter sont précipités par voie électrolytique sur les électrodes négatives pour purifier ainsi l'eau à traiter, dans lequel du titane est utilisé en tant qu'électrodes positives, de l'aluminium ou un alliage d'aluminium est utilisé en tant qu'électrodes négatives et un courant électrique circule entre les électrodes en une quantité suffisamment grande pour appliquer une tension qui est capable de rompre diélectriquement un film oxydé par voie anodique formé sur les surfaces des électrodes positives.

2. Procédé de purification d'eau selon la revendication 1, dans lequel le courant électrique circulant entre les électrodes est de 0,1 à 20 A par surface unitaire (1 m²) des électrodes positives.

3. Procédé de purification d'eau selon la revendication 1, dans lequel lorsque la conductivité électrique de l'eau à traiter est supérieure à une valeur A prédéterminée, le courant électrique circulant entre les électrodes est augmenté et lorsque la conductivité électrique de l'eau à traiter est inférieure à une valeur B prédéterminée, le courant électrique circulant entre les électrodes est réduit, la valeur A prédéterminée et la valeur B prédéterminée conservant un rapport A ≥ B.

4. Procédé de purification d'eau selon la revendication 3, dans lequel la valeur A prédéterminée de la conductivité électrique de l'eau à traiter est de 100 à 3000 µS/cm et la valeur B prédéterminée de celle-ci est de 100 à 3000 µS.

5. Procédé de purification d'eau selon la revendication 1, dans lequel lorsque le potentiel d'oxydoréduction de l'eau à traiter est supérieur à une valeur C prédéterminée, le courant électrique circulant entre les électrodes est augmenté et lorsque le potentiel d'oxydoréduction de l'eau à traiter est inférieur à une valeur D prédéterminée, le courant électrique circulant entre les électrodes est réduit, la valeur C prédéterminée et la valeur D prédéterminée conservant un rapport C ≥ D.

6. Procédé de purification d'eau selon la revendication 5, dans lequel la valeur C prédéterminée de potentiel d'oxydoréduction de l'eau à traiter est de +100 à -100 mV et la valeur D prédéterminée de celle-ci est de +100 à -100 mV.

7. Appareil de purification d'eau, comprenant :
une cuve électrolytique pour recevoir et drainer l'eau à purifier,
une ou plusieurs premières électrodes disposées dans la cuve électrolytique,
une ou plusieurs deuxièmes électrodes disposées dans la cuve électrolytique conservant un écartement prédéterminé avec les premières électrodes,
une source de cc pour appliquer une tension en cc en travers les premières électrodes et les deuxièmes électrodes pour détacher et retirer un film oxydé par voie anodique formé sur les surfaces des premières électrodes par rupture diélectrique,
un ampèremètre pour mesurer une valeur de courant électrique circulant entre les électrodes, et un régulateur de source de puissance qui, lorsque la valeur du courant mesurée par l'ampèremètre est inférieure à une valeur prédéterminée, augmente la tension de sortie de la source de cc pour augmenter le courant circulant entre les électrodes et, lorsque la valeur du courant mesurée par l'ampèremètre est supérieure à la valeur prédéterminée, réduit la tension de sortie de la source de cc pour réduire le courant circulant entre les électrodes,
dans lequel les premières électrodes comprennent du titane, les deuxièmes électrodes comprennent de l'aluminium ou un alliage d'aluminium, les premières électrodes sont connectées à la borne de sortie positive de la source de cc, les deuxièmes électrodes sont connectées à la borne de sortie négative de la source de cc.

8. Appareil de purification d'eau selon la revendication 7, dans lequel les premières électrodes ont la forme de plaques, de tiges rondes ou de tiges carrées, les deuxièmes électrodes ont la forme de plaques, de tiges rondes ou de tiges carrées et ces électrodes sont arrangées à l'opposé les unes des autres en la même forme ou en des formes différentes.

9. Appareil de purification d'eau selon la revendication 7 ou 8, dans lequel les électrodes sont recouvertes de sacs de protection à mailles ayant une ouverture de maille de 100 µm à 10 cm.

10. Appareil de purification d'eau selon la revendication 7, dans lequel la source de cc est une source de puissance à courant constant qui débite un courant constant de 0,1 à 20 A par surface unitaire (1 m²) des premières électrodes fonctionnant en tant qu'électrodes positives, entre les premières électrodes et les deuxièmes électrodes.

11. Appareil de purification d'eau selon la revendication 7, comprenant en outre un conductimètre pour mesurer la conductivité électrique de l'eau à traiter, et un régulateur de source de puissance qui, lorsque la conductivité électrique mesurée par le conductimètre est supérieure à une valeur A prédéterminée, augmente la tension de sortie de la source de cc pour augmenter le courant électrique qui circule entre les électrodes et, lorsque la conductivité électrique mesurée par le conductimètre est inférieure à une valeur B prédéterminée, réduit la tension de sortie de la source de cc pour réduire le courant électrique qui circule entre les électrodes, la valeur A prédéterminée et la valeur B prédéterminée conservant un rapport A ≥ B.

12. Appareil de purification d'eau selon la revendication 11, dans lequel la valeur A prédéterminée de la conductivité électrique de l'eau à traiter est de 100 à 3000 µS/cm et la valeur B prédéterminée de celle-ci est de 100 à 3000 µS.

13. Appareil de purification d'eau selon la revendication 7, comprenant en outre un compteur de potentiel d'oxydoréduction pour mesurer le potentiel d'oxydoréduction de l'eau à traiter, et un régulateur de courant qui, lorsque le potentiel d'oxydoréduction mesuré par le compteur de potentiel d'oxydoréduction est supérieur à une valeur C prédéterminée, augmente la tension de sortie de la source de cc pour augmenter le courant électrique qui circule entre les électrodes, et, lorsque le potentiel d'oxydoréduction mesuré par le compteur de potentiel d'oxydoréduction est inférieur à une valeur D prédéterminée, réduit la tension de sortie de la source de cc pour réduire le courant électrique qui circule entre les électrodes, la valeur C prédéterminée et la valeur D prédéterminée conservant un rapport C ≥ D.

14. Appareil de purification d'eau selon la revendication 13, dans lequel la valeur C prédéterminée de potentiel d'oxydoréduction de l'eau à traiter est de +100 à -100 mV et la valeur D prédéterminée de celle-ci est de +100 à -100 mV.
